# FASCICULE DE BREVET EUROPEEN

(11) **EP 1 638 762 B1**
(45) Date de publication et mention de la délivrance du brevet: **25.04.2012**
(21) Numéro de dépôt: 04767275.3
(22) Date de dépôt: 07.06.2004
(51) Int. Cl.: B29C 65/00, B29C 65/50, B29C 53/38, B29D 23/00, B29D 22/00

(54) **PROCEDE DE FABRICATION EN CONTINU D'UNE GAINE EN TISSU ENDUIT**
VERFAHREN ZUR KONTINUIERLICHEN HERSTELLUNG EINER BESCHICHTETEN TEXTILSTOFFHÜLLE
METHOD FOR CONTINUOUSLY PRODUCING A COATED FABRIC JACKET

(30) Priorité: 13.06.2003 FR 0307162
(43) Date de publication de la demande: 29.03.2006
(73) Titulaire: PENNEL et FLIPO, 59100 Roubaix (FR)
(72) Inventeur: LIMPENS, Marc, F-59150 Wattrelos (FR)
(74) Mandataire: Domenego, Bertrand
(86) Numéro de dépôt international: PCT/FR2004/001409
(87) Numéro de publication internationale: WO 2005/002836

(56) Documents cités:
- CH-A- 559 133
- FR-A- 1 038 106
- FR-A- 2 548 587
- US-B1- 6 489 006

## Description

La présente invention concerne un procédé de fabrication en continu d'une gaine en tissu enduit.

Les gaines en tissu enduit sont utilisées dans de nombreuses applications, par exemple pour former des tubes gonflables de structure pneumatique, comme des radeaux de sauvetage ou pour former des poutres ou des structures gonflables ou encore pour réaliser par exemple des barrages flottants anti-pollution.

Ce type de gaines comporte au moins une zone tubulaire et est constitué de deux nappes de tissu qui sont revêtues d'un enduit sur une ou sur deux faces. L'enduit est constitué par au moins une couche de caoutchouc ou par au moins une couche de matière plastique. La gaine est obtenue en superposant les deux nappes de tissu enduit et en solidarisant les deux nappes dans au moins deux zones longitudinales et parallèles et séparées par au moins une zone non solidarisée pour obtenir au moins un tube longitudinal.

Mais, les gaines réalisées de cette manière présentent un inconvénient qui réside principalement dans le fait que chacune des lignes de jonction entre les deux nappes, à l'intérieur du tube constitue une zone de moindre résistance surtout dans le cas où la gaine est sollicitée en cisaillement si bien que les performances mécaniques ne sont pas identiques sur l'ensemble du tube obtenu.

Pour fabriquer de telles gaines, on connaît également un autre procédé qui consiste à réaliser une bande textile tissée composée de fils de chaîne et d'un fil de trame et recouverte sur au moins une de ses faces d'un enduit.

Dans au moins une zone longitudinale, on forme une nappe inférieure et une nappe supérieure en faisant passer le fil de trame alternativement entre les fils de chaîne de la nappe inférieure et alternativement entre les fils de chaîne de la nappe supérieure et en faisant passer, de part et d'autre de ladite zone longitudinale, le fil de trame alternativement entre l'ensemble des fils de chaîne pour former des zones de liaison et obtenir la bande textile tissée comportant au moins une zone tubulaire bordée desdites zones de liaison.

Mais, dans ce cas, les lignes de jonction à l'intérieur du ou des tubes constituent les zones de fuite de l'air contenu dans ce ou ces tubes de telle sorte qu'ils se dégonflent progressivement.

On connaît dans le document FR-A-1 038 106 un tuyau qui comprend deux bords de bande de tissu enduits de caoutchouc et appliqués l'un contre l'autre au moyen de dissolution de caoutchouc, de manière à constituer une ailette longitudinale faisant saillie extérieurement le long du tuyau, la bande elle-même constituant la paroi du corps du tuyau.

Dans ce cas également, les lignes de jonction à l'intérieur du tube constituent des zones de fuite de l'air continu dans ce tube de sorte qu'il se dégonfle progressivement.

L'invention a pour but d'éviter ces inconvénients en proposant un procédé de fabrication en contenu d'une gaine en tissu enduit comportant au moins un tube étanche aux gaz ainsi qu'une gaine en tissu enduit obtenue par un tel procédé.

L'invention a donc pour objet un procédé de fabrication en continu d'une gaine en tissu enduit comportant au moins un tube étanche aux gaz et formée à partir de deux nappes superposées de tissu enduit formé de fils de chaîne et de fils de trame ou de tissu enduit non tissé, le procédé comprenant les étapes suivantes:
- on découpe dans au moins une autre nappe de tissu comportant un enduit sur une face, au moins deux bandes de tissu formé de fils de chaîne et de fils de trame, de largeur déterminée et de longueur sensiblement également à la longueur dudit tube à obtenir,
- on dépose sur la face de chacune des bandes opposées à celles revêtues de l'enduit, un matériau adhésif,
- on replie en deux chacune desdites bandes en rabattant l'une sur l'autre deux demi-faces revêtues du matériau adhésif pour maintenir ces bandes repliées,
- on fixe longitudinalement chacune desdites bandes repliées sur la première nappe en plaçant la ligne de séparation des demi-faces de chacune desdites bandes en vis à vis l'une de l'autre pour déterminer au moins une zone de formation d'un tube,
- on dépose dans ladite zone et sur la face de la première nappe comprise entre deux bandes adjacentes, un agent anti-collant,
- on applique la seconde nappe sur la première nappe et on solidarise les deux nappes entre elles par adhérisation de ces nappes dans les zones de liaison non revêtues de l'agent anti-collant, et
- on gonfle ledit tube pour déployer les deux demi-faces de chacune des bandes qui forme à l'intérieur dudit tube au niveau de chaque jonction des deux nappes, une cornière garantissant les propriétés mécaniques et l'étanchéité.

Selon d'autres caractéristiques de l'invention :
- le tissu de chaque nappe est revêtu de l'enduit sur une face,
- le tissu de chaque nappe est revêtu de l'enduit sur les deux faces,
- l'enduit est constitué par au moins une couche de caoutchouc ou par au moins une couche de matière plastique,
- la fixation de chaque bande repliée sur la première nappe est obtenue par application d'une légère pression et par chauffage de chaque bande repliée,
- la fixation de chaque bande repliée sur la première nappe est obtenue par collage de chaque bande repliée sur ladite première nappe,
- l'agent anti-collant est constitué par un produit incompatible avec l'enduit des nappes, comme par exemple un film infusible, une poudre ou une dispersion ou une solution d'anti-collant,
- l'adhérisation des deux nappes dans les zones non revêtues de l'agent anti-collant est obtenue en pressant et en chauffant simultanément lesdites nappes,
- les fils de chaîne des deux nappes s'étendent parallèlement à l'axe longitudinal de la nappe correspondante et les fils de trame s'étendent perpendiculairement auxdits fils de chaîne,
- les fils de chaîne des deux bandes s'étendent parallèlement à l'axe longitudinal de la bande correspondante et les fils de trame s'étendent perpendiculairement auxdits fils de chaîne,
- les fils de chaîne de la première nappe sont inclinés par rapport à l'axe longitudinal de cette première nappe et les fils de trame de la première nappe s'étendent perpendiculairement auxdits fils de chaîne et en ce que, après application de la seconde nappe sur la première nappe, les fils de chaîne de la seconde nappe sont inclinés par rapport à l'axe longitudinal de cette seconde nappe selon un sens opposé au sens d'inclinaison des fils de chaîne de la première nappe et les fils de trame de la seconde nappe s'étendent perpendiculairement auxdits fils de chaîne de cette seconde nappe, et
- les fils de chaîne et les fils de trame des deux bandes sont disposés de manière identique aux fils de chaîne et aux fils de trame de la première nappe, avant pliage desdites bandes.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'un exemple de réalisation d'une gaine en tissu enduit obtenue par le procédé de fabrication conforme à l'invention,
- la Fig. 2 est une vue schématique en perspective des différents éléments composant la gaine conforme à l'invention,
- les Figs. 3 à 6 sont des vues schématiques en coupe transversale montrant les différentes étapes du procédé de fabrication de la gaine conforme à l'invention,
- la Fig. 7 est une vue schématique en perspective montrant une première disposition des fils de chaîne et des fils de trame des deux nappes et des deux bandes composant la gaine obtenue par le procédé selon l'invention,
- la Fig. 8 est une vue schématique en perspective montrant une seconde disposition des fils de chaîne et des fils de trame des deux nappes et des deux bandes composant la gaine obtenue par le procédé selon l'invention, et
- la Fig. 9 est une vue schématique d'une portion d'une gaine obtenue avec la disposition selon la Fig. 8.

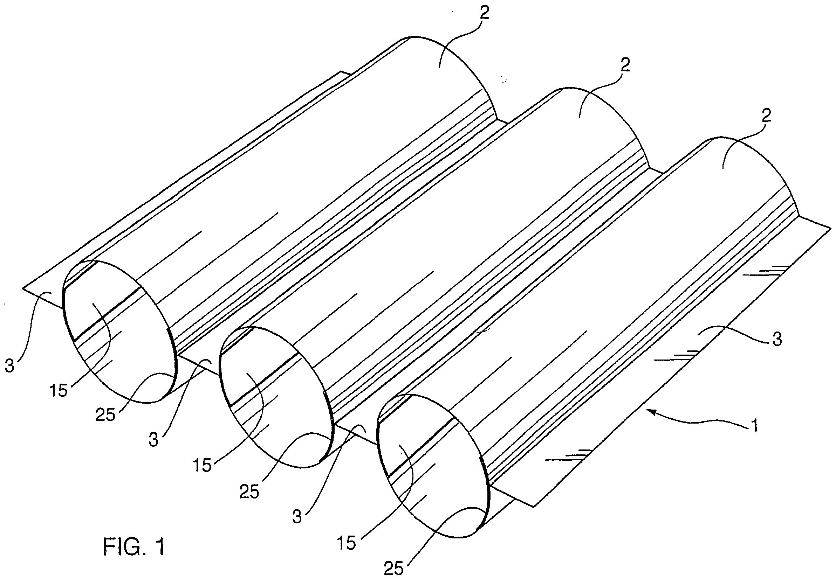

Sur la Fig. 1, on a représenté schématiquement et en perspective un exemple d'une gaine désignée par la référence générale 1.

Selon cet exemple de réalisation représenté à la Fig. 1, la gaine 1 comporte plusieurs tubes 2 et, de part et d'autre de ces tubes 2, une zone longitudinale de liaison 3 fermant de part et d'autre chaque zone central tubulaire 2.

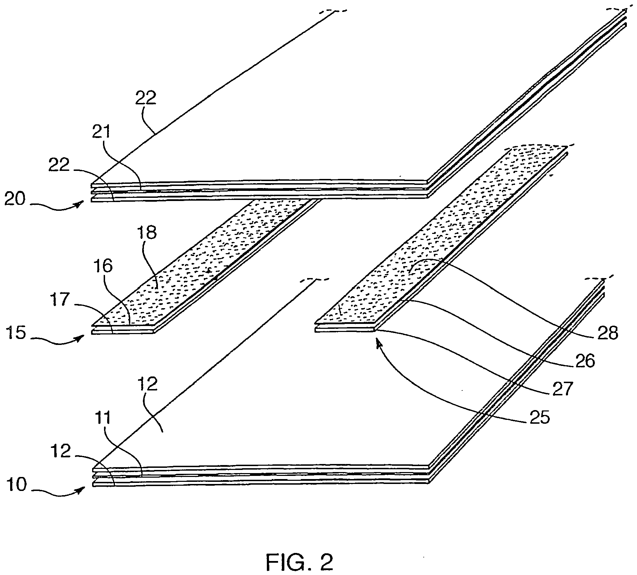

En se reportant maintenant aux Figs. 2 à 6, on va décrire les différents éléments composant une gaine 1 ainsi que le procédé de fabrication de cette gaine 1 composée d'un tube 2 et de deux zones de liaison 3 disposées chacune de part et d'autre du tube 2, les éléments et le procédé de fabrication d'une gaine 1 composée de plusieurs zones tubulaires 2 parallèles et séparées les unes des autres d'une zone de liaison 3, étant analogues.

Sur les Figs. 2 à 6, les épaisseurs des différents éléments qui composent la gaine 1 ont été volontairement augmentées dans un but de faciliter la compréhension.

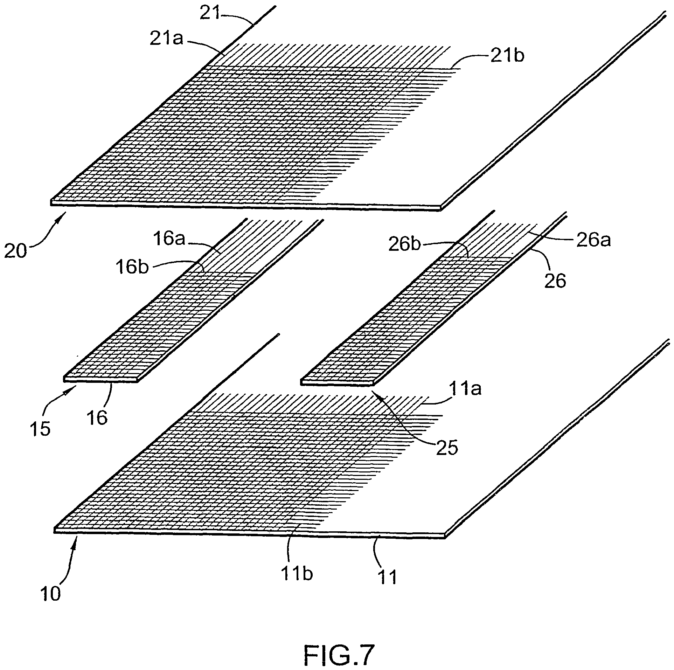

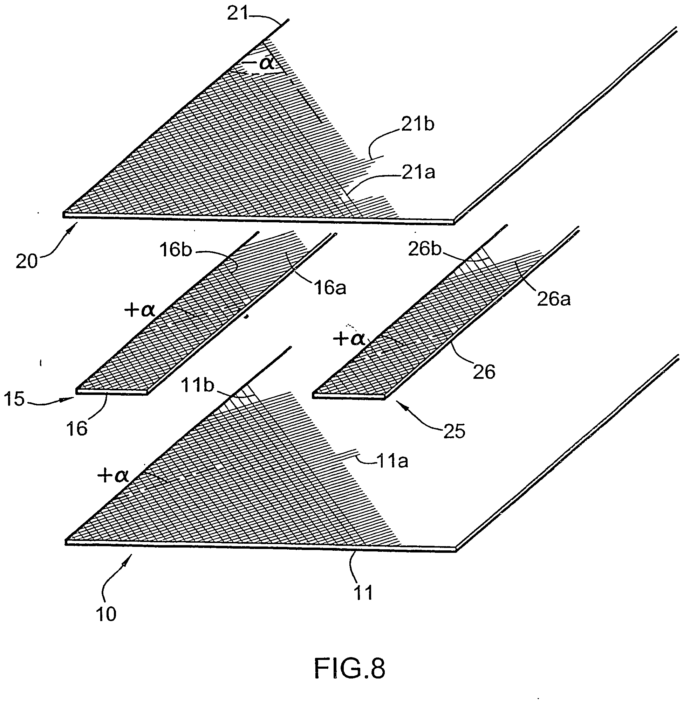

La gaine 1 se compose d'une première nappe 10 comprenant un tissu 11 tissé ou non tissé, réalisé à partir de fibres de polyamide ou de polyester ou à partir d'autres fibres. Le tissu 11 est formé de fils de chaîne 11a et de fils de trame 11b (Figs. 7 et 8). Ce tissu 11 tissé est revêtu sur au moins une de ses faces, et, dans l'exemple de réalisation représenté sur les figures sur chacune de ses faces d'une couche 12 d'un enduit.

Une colle est déposée entre le tissu 11 et l'enduit 12 pour obtenir une bonne adhérisation entre ces deux éléments. Le dépôt de cette colle est réalisé par exemple sur un métier à enduire et la colle est formulée de façon à obtenir une bonne adhérence entre le tissu 11 et l'enduit 12.

La gaine 1 se compose également d'une seconde nappe 20 comprenant un tissu 21 tissé ou non tissé réalisé aussi à partir de fibres de polyamide ou de polyester ou à partir d'autres fibres. Le tissu 21 tissé est formé de fils de chaîne 21a et de fils de trame 21b (Figs. 7 et 8). Ce tissu 21 est revêtu sur au moins une de ses faces et, dans l'exemple de réalisation sur chacune de ses faces, d'une couche 22 d'un enduit. Une colle est déposée entre le tissu 21 et l'enduit 22 pour obtenir une bonne adhérence entre ces éléments. Le dépôt de la colle se fait sur un métier à enduire et la colle est formulée pour obtenir une bonne adhérence entre le tissu 21 et l'enduit 22.

L'enduit 12 et 22 déposé sur le tissu 11 et 21 est constitué par au moins une couche de caoutchouc ou au moins une couche de matière plastique. Le dépôt des couches d'enduit 12 et 22 sur chaque tissu 11 et 21 est réalisé de manière classique soit par enduction, soit par calandrage ou soit par extrusion.

La gaine 1 comprend également deux bandes, respectivement 15 et 25, qui sont découpées dans au moins une autre nappe de tissu, non représentée.

La bande 15 comprend un tissu 16 qui est revêtu sur une de ses faces d'un enduit 17 formé par une couche de caoutchouc ou une couche de matière plastique. La face du tissu 16 opposée à celle comportant l'enduit 17 est revêtue d'un matériau adhésif 18. De manière analogue, la bande 25 se compose d'un tissu 26 revêtu sur l'une de ses faces d'un enduit composé d'au moins une couche de caoutchouc ou de matière plastique. La face du tissu 26 opposée à celle comportant l'enduit 27 est revêtue d'un matériau adhésif 28.

Les tissus 16 et 26 des bandes, respectivement 15 et 25, sont aussi formés de fils de chaîne, respectivement 16a et 26a, et de fils de trame, respectivement 16b et 26b (Figs. 7 et 8).

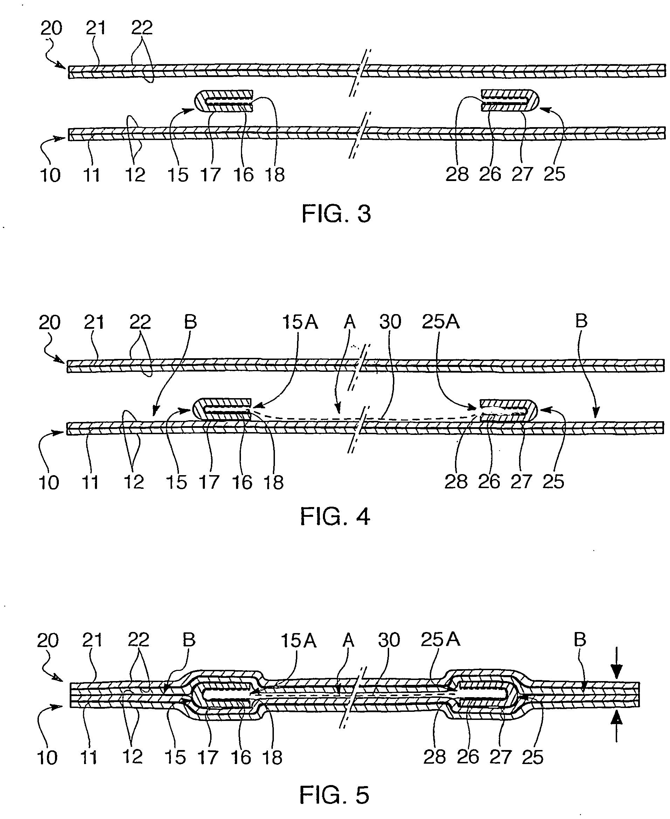

Ensuite, chacune des bandes 15 et 25 est repliée afin de rabattre l'une sur l'autre deux demi-faces revêtues du matériau adhésif, respectivement 18 et 28, pour maintenir ces bandes, respectivement 15 et 25 repliées ainsi que montré à la Fig. 3. Les bandes 15 et 25 ainsi repliées sont fixées longitudinalement sur la première nappe 10 en plaçant la ligne de séparation 15A et 25A des demi faces de chacune des bandes 15 et 25 en vis à vis l'une de l'autre pour déterminer au moins une zone A de formation d'un tube 2, comme montré à la Fig. 4. La distance séparant les deux bandes 15 et 25 repliée est fonction du diamètre du tube 2 à obtenir.

Si l'adhérence est suffisante entre l'enduit 12 de la nappe 10 et l'enduit 17 et 27 des bandes 15 et 25, ce qui est notamment le cas d'enduit constitué par une couche de caoutchouc, les bandes 15 et 25 repliées sont fixées sur la première nappe 10 par l'application d'une légère pression et par chauffage de chaque bande repliée.

Par contre, si l'adhérence n'est pas suffisante, ce qui est le cas des enduits formés par une couche de matière plastique, des points de colle sont déposés entre chaque bande repliée 15 et 25 et la première nappe 10.

Dans la zone A située entre les lignes de séparation 15a et 25a des demi-faces de chacune des bandes 15 et 25, la face de la première nappe 10 est revêtue d'un agent anti-collant 30. Cet agent anti-collant 30 doit être parfaitement incompatible avec l'enduit déposé sur les nappes 10 et 20 et il ne doit pas fondre aux températures d'assemblage des deux nappes 10 et 20, comme on le verra ultérieurement. Cet agent anti-collant est constitué soit par un film infusible, soit par une poudre, comme par exemple du talc ou du bentone, soit par une dispersion ou une solution d'anti-collant.

Les deux nappes 10 et 20 sont ensuite assemblées en appliquant la seconde nappe 20 sur la face de la première nappe 10 munie des bandes 15 et 25 repliées, ainsi que montré par la Fig. 5. Les deux nappes 10 et 20 sont solidarisées entre elles par adhérence dans les zones de liaison B situées de part et d'autre de la zone A de formation d'un tube 2, c'est à dire dans les zones non revêtues de l'agent anti-collant 30. Cette adhérence est obtenue en pressant et en chauffant simultanément les deux nappes 10 et 20.

Le chauffage permet, dans le cas d'un enduit constitué par du caoutchouc, de le vulcaniser et, dans le cas d'un enduit constitué par une matière plastique, de les fondre. La pression apporte la cohésion et l'adhérence entre le tissu, l'enduit des nappes 10 et 20 et des bandes 15 et 25. Cette opération se fait en continue sur une machine comportant un ou plusieurs cylindres qui sont chauffés et munis de vérins pour assurer la pression.

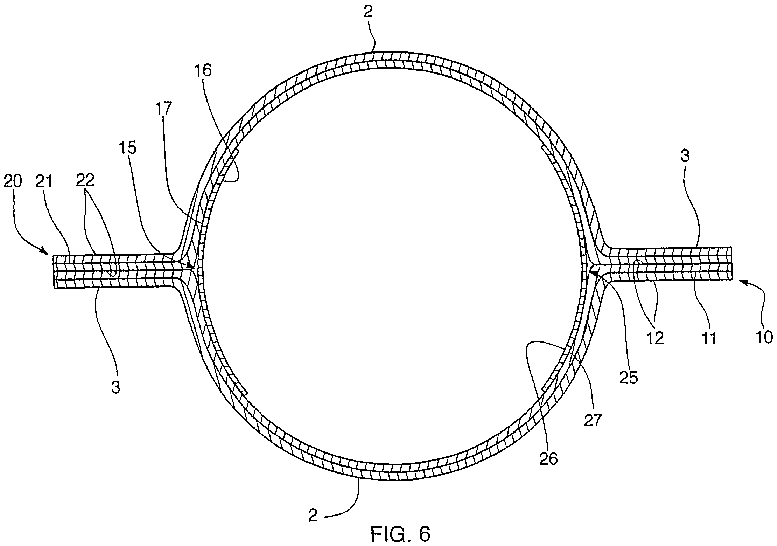

Après ces opérations d'assemblage, un gaz est injecté dans la zone A située entre les lignes de séparation 15a et 25a des bandes repliées 15 et 25 ce qui a pour effet de gonfler cette zone afin d'obtenir un tube 2. Lors de ce gonflage, les bandes 15 et 25 se déploient et forment, à l'intérieur du tube 2 au niveau de chaque jonction des deux nappes 10 et 20, une cornière garantissant les propriétés mécaniques et l'étanchéité ainsi que montré à la Fig. 6. De ce fait chaque jonction entre les deux nappes 10 et 20 est renforcée par une bande constituant une cornière située à l'intérieur du tube, ce qui donne des assemblages résistant au cisaillement et, de ce fait, avec des performances mécaniques identiques sur l'ensemble du tube.

Sur les Figs. 7 et 8, uniquement les tissus 11, 21, 16 et 26 des nappes 10 et 20 et des bandes 15 et 25 ont été représentés et l'écartement entre les fils de chaîne et les fils de trame de ces tissus a été volontairement agrandi afin de faciliter la compréhension.

Selon un premier mode de réalisation représenté à la Fig. 7, les fils de chaîne 11a du tissu 11 de la nappe 10 s'étendent parallèlement à l'axe longitudinal de cette nappe 10 et les fils de trame 11b s'étendent perpendiculairement auxdits fils de chaîne 11a. De même, les fils de chaîne 21a du tissu 21 de la nappe 20 s'étendent parallèlement à l'axe longitudinal de cette nappe 20 et les fils de trame 21b s'étendent perpendiculairement auxdits de chaîne 21a. De façon analogue, les fils de chaîne 16a et 26a des tissus 16 et 26 des bandes, respectivement 15 et 25, s'étendent parallèlement à l'axe longitudinal de ces bandes 15 et 25 tandis que les fils de trame 16b et 26b s'étendent perpendiculairement auxdits fils de chaîne, respectivement 16a et 26a.

Dans ce mode de réalisation, les tissus composant les nappes 10 et 20 ainsi que les bandes 15 et 25 sont chacun formés par un tissu dénommé droit fil.

Du fait de la disposition des fils de chaîne et des fils de trame des tissus des nappes 10 et 20 et des bandes 15 et 25, le ou les tubes 2 composant la gaine 1 sont, après gonflage, rectilignes, ainsi que montré à la Fig. 1.

Selon un second mode de réalisation représenté à la Fig. 8, les fils de chaîne 11a du tissu 11 de la première nappe 10 sont inclinés d'un angle + α par rapport à l'axe longitudinal de cette première nappe 10 et les fils de trame 11 b du tissu 11 de ladite première nappe 10 s'étendent perpendiculairement auxdits fils de chaîne 11a.

Par contre, après application de la seconde nappe 21 sur la première nappe 10, les fils de chaîne 21a du tissu 21 de cette seconde nappe 20 sont inclinés d'un angle - α par rapport à l'axe longitudinal de cette seconde nappe 20, c'est à dire selon un sens opposé au sens d'inclinaison des fils de chaîne 11a de la première nappe 10 tandis que les fils de trame 21 b de ladite seconde nappe 20 s'étendent perpendiculairement auxdits fils de chaîne 21a de cette seconde nappe 20.

Les fils de chaîne 16a et 26a et les fils de trame 16b et 26b des tissus 16 et 26 des bandes 15 et 25 sont disposés de manière identique aux fils de chaîne 11a et aux fils de trame 11b du tissu 11 de la première nappe 10. Ainsi, les fils de chaîne 16a et 26a forment un angle + α avec l'axe longitudinal de la bande 15 ou 25 correspondante.

Après pliage des bandes 15 et 25, les fils de chaîne 16a et 26a et les fils de trame 16b et 26b de la demi-bande inférieure ont la même disposition que les fils de chaîne 11a et les fils de trame 11b de la nappe 10 et ces fils de chaîne 16a et 26a et ces fils de trame 16b et 26b de la demi-bande supérieure ont la même disposition que les fils de chaîne 21 a et les fils de trame 21 b de la nappe 20.

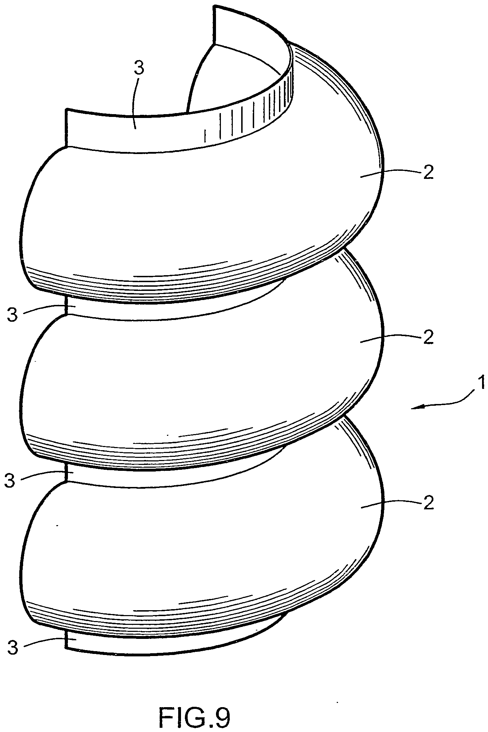

Etant donné l'orientation de ces fils de chaîne et de ces fils de trame, le ou les tubes 2 de la gaine 1 ont, après gonflage, la forme d'un tore, ainsi que montré à la Fig. 9.

Le diamètre du tore ainsi obtenu est réglé en fonction de la valeur de l'angle α. Cet angle α est compris entre une valeur supérieure à 0° jusqu'à 45°.

Ainsi, le tissu utilisé pour les nappes 10 et 20 et pour les bandes 15 et 25 est, dans ce dernier mode de réalisation, formé par un tissu dénommé biais.

Le procédé selon l'invention s'applique à la fabrication par exemple de tubes gonflables destinés à la réalisation de structures pneumatiques, comme par exemple les radeaux de sauvetage, les bateaux pneumatiques, les réservoirs souples ou encore les barrages flottants anti-pollution, et plus généralement à tous les dispositifs utilisant des formes développées cylindriques et gonflables.

Ce procédé permet de produire une gaine en tissu enduit comprenant n zones tubulaires formant des tubes et n + 1 zones liaison. Une opération de découpe effectuée en continu dans les zones de liaison permet de séparer si nécessaire les tubes.

## Revendications

1. Procédé de fabrication en continu d'une gaine (1) en tissu enduit comportant au moins un tube (2) étanche aux gaz et obtenu à partir de deux nappes (10 ; 20) superposées de tissu (11 ; 21) enduit formé de fils de chaîne (11a ; 21a) et de fils de trame (11b ; 21b) ou de tissu enduit non tissé, le procédé comprenant les étapes suivantes:
- on découpe dans au moins une autre nappe de tissu comportant un enduit sur une face, au moins deux bandes (15 ; 25) de tissu (16 ; 26) formé de fils de chaîne (16a ; 26a) et de fils de trame (16b ; 26b), de largeur déterminée et de longueur sensiblement égale à la longueur dudit tube (2) à obtenir,
- on dépose sur la face de chacune des bandes (15 ; 25) opposée à celle revêtue de l'enduit (17 ; 27), un matériau adhésif (18 ; 28),
- on plie en deux chacune des bandes (15 ; 25) en rabattant l'une sur l'autre deux demi-faces revêtues du matériau adhésif (18 ; 28) pour maintenir ces bandes (15 ; 25) repliées,
- on fixe longitudinalement chacune des bandes (15 ; 25) repliées sur la première nappe (10) en plaçant la ligne de séparation (15a ; 25a) des demi-faces de chacune des bandes (15 ; 25) en vis à vis l'une de l'autre pour déterminer au moins une zone de formation d'un tube (2),
- on dépose dans ladite zone et sur la face de la première nappe (10) comprise entre les deux bandes (15 ; 25) adjacentes, un agent anti-collant (30),
- on applique la seconde nappe (20) sur la première nappe (10) et on solidarise les deux nappes (10 ; 25) entres elles par adhérisation de ces nappes (10 ; 20) dans les zones de liaison non revêtues de l'agent anti-collant (30), et
- on gonfle ledit tube (2) pour déployer les deux demi-faces de chacune des bandes (15 ; 25) qui forme à l'intérieur dudit tube (2) au niveau de chaque jonction des deux nappes (10 ; 20), une cornière garantissant les propriétés mécaniques et l'étanchéité.

2. Procédé selon la revendication 1, **caractérisé en ce que** le tissu (11 ; 21) de chaque nappe (10 ; 20) est revêtue de l'enduit (12 ; 22) sur une face.

3. Procédé selon la revendication 1, **caractérisé en ce que** le tissu (11 ; 21) de chaque nappe (10 ; 20) est revêtue de l'enduit (12 ; 22) sur les deux faces.

4. Procédé selon l'une quelconque des revendications 1 à 3, **caractérisé en ce que** l'enduit (12 ; 22, 16 ; 26) est constitué par au moins une couche de caoutchouc.

5. Procédé selon l'une quelconque des revendications 1 à 3, **caractérisé en ce que** l'enduit (12 ; 22, 16 ; 26) est constitué par au moins une couche de matière plastique.

6. Procédé selon l'une quelconque des revendications 1 à 4, **caractérisé en ce que** la fixation de chaque bande (15 ; 25) repliée sur la première nappe (10) est obtenue par application d'une légère pression et par chauffage de chaque bande repliée.

7. Procédé selon l'une quelconque des revendications 1 à 3 ou 5, **caractérisé en ce que** la fixation de chaque bande (15 ; 25) repliée sur la première nappe (10) est obtenue par collage de chaque bande repliée sur ladite première nappe.

8. Procédé selon l'une quelconque des revendications précédentes, **caractérisé en ce que** l'agent anti-collant (30) est constitué par un produit incompatible avec l'enduit (12 ; 22) des nappes (10 ; 20), comme par exemple un film infusible, une poudre ou une dispersion ou une solution d'anti-collant.

9. Procédé selon l'une quelconque des revendications précédentes, **caractérisé en ce que** l'adhérence des deux nappes (10 ; 20) dans les zones non revêtues de l'agent anti-collant (30) est obtenue en pressant et en chauffant simultanément lesdites bandes.

10. Procédé selon l'une quelconque des revendications précédentes, **caractérisé en ce que** les fils de chaîne (11a ; 21 a) des tissus (11 ; 21) des deux nappes (10, 20) s'étendent parallèlement à l'axe longitudinal de la nappe (10 ; 20) correspondante et les fils de trame (11 b ; 21 b) s'étendent perpendiculairement auxdits fils de chaîne (11a ; 21 a).

11. Procédé selon l'une quelconque des revendications précédentes, **caractérisé en ce que** les fils de chaîne (16a ; 26a) des tissus (16 ; 26) des deux bandes (15 ; 25) s'étendent parallèlement à l'axe longitudinal de la bande (15 ; 25) correspondante et les fils de trame (16b ; 26b) s'étendent perpendiculairement auxdits fils de chaîne (16a ; 26a).

12. Procédé selon l'une quelconque des revendications précédentes, **caractérisé en ce qu'**après gonflage, ledit tube (2) est rectiligne.

13. Procédé selon l'une quelconque des revendications 1 à 9, **caractérisé en ce que** les fils de chaîne (11a) du tissu (11) de la première nappe (10) sont inclinés par rapport à l'axe longitudinal de cette première nappe (10) et les fils de trame (11 b) de la première nappe (10) s'étendent perpendiculairement auxdits fils de chaîne (11a) et **en ce que**, après application de la seconde nappe (20) sur la première nappe (10), les fils de chaîne (21a) du tissu (21) de la seconde nappe (20) sont inclinés par rapport à l'axe longitudinal de cette seconde nappe (20) selon un sens opposé au sens d'inclinaison des fils de chaîne (11a) de la première nappe (10) et les fils de trame (21 b) du tissu (21) de la seconde nappe (20) s'étendent perpendiculairement auxdits fils de chaîne (21 a) de cette seconde nappe (20).

14. Procédé selon l'une quelconque des revendications 1 à 9 ou 13, **caractérisé en ce que** les fils de chaîne (16a ; 26a) et les fils de trame (16b ; 26b) des tissus (16 ; 26) des deux bandes (15 ; 25) sont disposés de manière identique aux fils de chaîne (11a) et aux fils de trame (11b) de la première nappe (10), avant pliage desdites bandes (15 ; 25).

15. Procédé selon l'une quelconque des revendications 1 à 9, 13 ou 14, **caractérisé en ce qu'**après gonflage, ledit tube (2) a la forme d'un tore.

## Claims

1. Method for continuously producing a coated fabric jacket (1) which comprises at least one gas-tight tube (2) and which is formed from two superimposed sheets (10; 20) of coated fabric (11; 21) formed by warp threads (11a; 21a) and weft threads (11b; 21b), or a coated non-woven fabric, said process comprising the following steps:
- from at least one other sheet of fabric comprising a coating on one face, at least two strips (15; 25) of fabric (16; 26) formed by warp threads (16a; 26a) and weft threads (16b; 26b) are cut having a specific width and a length which is substantially equal to the length of the tube (2) to be produced,
- an adhesive material (18; 28) is deposited on the face of each of the strips (15, 25) opposite that covered with the coating (17; 27),
- each of the strips (15; 25) is folded in two by fording over two half-faces covered with the adhesive material (18; 28) one onto the other in order to retain those strips (15; 25) in the folded state,
- each of the folded strips (15; 25) is longitudinally fixed to the first sheet (10) by positioning the separation line (15a; 25a) of the half-faces of each of the strips (15; 25) facing each other in order to determine at least one zone for forming a tube (2),
- an anti-adhesive agent (30) is deposited in the zone and on the face of the first sheet (10) contained between the two adjacent strips (15; 25),
- the second sheet (20) is applied on the first sheet (10) and the two sheets (10; 20) are joined together by bonding those sheets (10; 20) in the connection zones which are not covered with the anti-adhesive agent (30), and
- the tube (2) is inflated in order to deploy the two half-faces of each of the strips (15; 25) which forms, at the inner side of the tube (2) in the region of each joint of the two sheets (10; 20), an angled connection which ensures the mechanical propertied and the sealing,

2. Method according to claim 1, **characterised in that** the fabric (11; 21) of each sheet (10; 20) is covered with the coating (12; 22) on one face.

3. Method according to claim 1, **characterised in that** the fabric (11; 21) of each sheet (10; 20) is covered with the coating (12; 22) on the two faces.

4. Method according to any one of claim 1 to 3, **characterised in that** the coating (12; 22, 16; 26) is constituted by at least one layer of rubber.

5. Method according to any one of claims 1 to 3, **characterised in that** the coating (12; 22, 16; 26) is constituted by at least one layer of plastics material.

6. Method according to any one of claims 1 to 4, **characterised in that** the fixing of each folded strip (15; 25) to the first sheet (10) is brought about by applying a slight pressure and by heating each folded strip.

7. Method according to any one of claims 1 to 3 or 5, **characterised in that** the fixing of each folded strip (15; 25) to the first sheet (10) is brought about by adhesively-bonding each folded strip to the first sheet.

8. Method according to any one of the preceding claims, **characterised in that** the anti-adhesive agent (30) is constituted by a product which is incompatible with the coating (12; 22) of the sheets (10; 20), such as, for example, an infusible film, a powder or a dispersion, or a solution of anti-adhesive agent.

9. Method according to any one of the preceding claims, **characterised in that** the adhesion of the two sheets (10; 20) in the zones which are not covered with anti-adhesive agent (30) is brought about by pressing and simultaneously heating the sheets.

10. Method according to any one of the preceding claims, **characterised in that** the warp threads (11a; 21a) of the fabrics (11; 21) of the two sheets (10; 20) extend parallel with the longitudinal axis of the corresponding sheet (10; 20) and the weft threads (11b; 21b) extend perpendicularly relative to the warp threads (11a; 21a)

11. Method according to any one of the preceding claims, **characterised in that** the warp threads (16a; 26a) of the fabrics (16; 26) of the two strips (15; 25) extend parallel with the longitudinal axis of the corresponding strip (15; 25) and the weft threads (16b; 26b) extend perpendicularly relative to the warp threads (16a; 26a).

12. Method according to any one of the preceding claims, **characterised in that** after inflation the tube (2) is rectilinear.

13. Method according to any one of claims 1 to 9, **characterised in that** the warp threads (11a) of the fabric (11) of the first sheet (10) are inclined relative to the longitudinal axis of that first sheet (10) and the weft threads (11b) of the first sheet (10) extend perpendicularly relative to the warp threads (11a), and **in that** after the second sheet (20) is applied on the first sheet (10) , the warp threads (21a) of the fabric (21) of the second sheet (20) are inclined relative to the longitudinal axis of that second sheet (20) in a direction counter to the direction of inclination of the warp threads (11a) of the first sheet (10), and the weft threads (21b) of the fabric (21) of the second sheet (20) extend perpendicularly relative to the warp threads (21a) of that second sheet (20).

14. Method according to any one of claims 1 to 9 or 13, **characterised in that** the warp threads (16a; 26a) and the weft threads (16b; 26b) of the fabrics (16; 26) of the two strips (15; 25) are arranged in an identical manner to the warp threads (21a) and the weft threads (11b) of the first sheet (10), before the strips (15; 25) are folded.

15. Method according to any one of claims 1 to 9, 13 or 14, **characterised in that** after inflation, the tube (2) has the form of a torus.

## Patentansprüche

1. Verfahren zum kontinuierlichen Herstellen einer Hülle (1) aus beschichtetem Stoff, die zumindest eine gasdichte Röhre (2) aufweist, die aus zwei übereinandergelegten Lagen (10; 20) aus beschichtetem Stoff (11;21) erhalten wird, der aus Kettfäden (11a; 21a) und Schussfäden (11b; 21b) oder aus beschichtetem, nicht gewebtem Stoff gebildet wird, wobei das Verfahren die folgenden Schritte urnfasst:
- aus zumindest einer weiteren Stofflage, die auf einer Seite eine Beschichtung aufweist, werden zumindest zwei Streifen (15; 25) aus einem aus Kettfäden (16a; 26a) und Schussfäden (16b; 26b) gebildeten Stoff (16; 26) mit bestimmter Breite und mit einer Länge zugeschnitten, die im Wesentlichen gleich der Länge der zu erhaltenden Röhre (2) ist,
- auf derjenigen Seite eines jeden Streifens (15; 25), die der mit der Beschichtung (17; 27) versehenen entgegengesetzt ist, wird ein Haftmittel (18; 28) aufgebracht,
- jeder Streifen (15; 25) wird durch Umlegen halbiert, indem zwei Flächenhälften, die mit dem Haftmittel (18; 28) beschichtet sind, aufeinander umgeschlagen werden, um diese Streifen (15; 25) umgelegt zu halten,
- jeder umgelegte Streifen (15; 25) wird longitudinal an der ersten Lage (10) fixiert, indem die Trennlinien (15a; 25a) der Flächenhälften eines jeden Streifens (15; 25) einander gegenüberliegend angeordnet werden, um zumindest einen Bereich zum Bilden einer Röhre (2) zu bestimmen,
- in den genannten Bereich und auf die zwischen den beiden aneinandergrenzenden Streifen (15; 25) liegende Fläche der ersten Lage (10) wird ein Antihaftmittel (30) ausgetragen,
- die zweite Lage (20) wird auf die erste Lage (10) aufgebraucht und die beiden Lagen (10; 25) werden durch Anhaftung dieser Lagen (10; 20) in den Verbindungsbereichen, die nicht mit dem Antihaftmittel (30) beschichtet sind, fest verbunden,
- die Röhre (2) wird aufgeblasen, um die beiden Flächenhälften eines jeden Streifens (15; 25) zu entfalten, wodurch innerhalb der Röhre (2) im Bereich einer jeden Verbindungsnaht der beiden Lagen (10; 20) eine Eckverstärkung gebildet wird, die die mechanischen Eigenschaften und die Dichtheit gewährleistet.

2. Verfahren nach Anspruch 1,
**dadurch gekennzeichnet, dass** der Stoff (11; 21) einer jeden Lage (10; 20) auf einer Seite mit der Beschichtung (12; 22) versehen wird.

3. Verfahren nach Anspruch 1,
**dadurch gekennzeichnet**, dasn der Stoff (11; 21) einer jeden Lage (10; 20) auf beiden Seiten mit der Beschichtung (12; 22) versehen wird.

4. Verfahren nach einem der Ansprüche 1 bis 3,
**dadurch gekennzeichnet, dass** die Beschichtung (12; 22, 16; 26) aus zumindest einer Gummischicht besteht.

5. Verfahren nach einem der Ansprüche 1 bis 3,
**dadurch gekennzeichnet, dass** die Beschichtung (12; 22, 16; 26) aus zumindest einer Kunststoffschicht besteht.

6. Verfahren nach einem der Ansprüche 1 bis 4,
**dadurch gekennzeichnet, dass** die Fixierung eines jeden umgelegten Streifens (15; 25) an der ersten Lage (10) durch Aufbringen eines leichten Drucks und durch Erhitzen von jedem umgelegten Streifen erfolgt.

7. Verfahren nach einem der Ansprüche 1 bis 3 oder 5,
**dadurch gekennzeichnet, dass** die Fixierung eines jeden umgelegten Streifens (15; 25) an der ersten Lage (10) durch Verkleben eines jeden umgelegten Streifens mit der ersten Lage erfolgt.

8. Verfahren nach einem der vorangehenden Ansprüche,
**dadurch gekennzeichnet , dass** das Antihaftmittel (30) aus einem mit der Beschichtung (12; 22) der Lagen (10; 20) nicht kompatiblen Mittel besteht, wie beispielsweise aus einem unschmelzbaren Überzug, einem Antihaftpulver oder einer Antihaftdispersion oder -lösung.

9. Verfahren nach einem der vorangehenden Ansprüche,
**dadurch gekennzeichnet, dass** das Haftvermögen der beiden Lagen (10; 20) in den nicht mit dem Antihaftmittel (30) beschichteten Bereichen durch Aneinanderdrücken und gleichzeitiges Erhitzen der Streifen erhalten wird.

10. Verfahren nach einem der vorangehenden Ansprüche,
**dadurch gekennzeichnet, dass** die Kettfäden (11a; 21a) der Stoffe (11; 21) der beiden Lagen (10, 20) sich parallel zur Längsachse der entsprechenden Lage (10; 20) er strecken und die Schussfäden (11b; 21b) sich senkrecht zu den Kettfäden (11a; 21a) erstrecken.

11. Verfahren nach einem der vorangehenden Ansprüche,
**dadurch gekennzeichnet, dass** die Kettfäden (16a; 26a) der Stoffe (16; 26) der beiden Streifen (15; 25) sich parallel zur Längsachse des entsprechenden Streifens (15; 25) erstrecken und die Schussfäden (16b; 26b) sich senkrecht zu den Kettfäden (16a; 26a) erstrecken.

12. Verfahren nach einem der vorangehenden Ansprüche,
**dadurch gekennzeichnet**, das die Röhre (2) nach dem Aufblasen geradlinig verläuft.

13. Verfahren nach einem der Ansprüche 1 bis 9,
**dadurch gekennzeichnet, dass** die Kettfäden (11a) des Stoffs (11) der ersten Lage (10) gegenüber der Längsachse dieser ersten Lage (10) geneigt verlaufen und die Schussfäden (11b) der ersten Lage (10) sich senkrecht zu den Kettfäden (11a) erstrecken und dass nach Aufbringen der zweiten Lage (20) auf die erste Lage (10) die Kettfäden (21a) des Stoffs (21) der zweiten Lage (20) gegenüber der Längsachse dieser zweiten Lage (20) in einer Richtung geneigt verlaufen, die der Neigungsrichtung der Kettfäden (11a) der ersten Lage (10) entgegengesetzt ist, und die Schussfäden (21b) des Stoffs (21) der zweiten Lage (20) sich senkrecht zu den Kettfäden (21a) dieser zweiten Lage (20) erstrecken.

14. Verfahren nach einem der Ansprüche 1 bis 9 oder 13,
**dadurch gekennzeichnet, dass** vor dem Umlegen der beiden Streifen (15; 25) die Kettfäden (16a; 26a) und die Schussfäden (16b; 26b) der Stoffe (16; 26) der beiden Streifen (15; 25) identisch zu den Kettfäden (11a) und den Schussfäden (11b) der ersten Lage (10) angeordnet sind.

15. Verfahren nach einem der Ansprüche 1 bis 9, 13 oder 14,
**dadurch gekennzeichnet, dass** die Röhre (2) nach dem Aufblasen eine Torusform hat.
